# EUROPEAN PATENT APPLICATION

(11) **EP 4 852 120 A1**
(43) Date of publication of application: **09.12.2026**
(21) Application number: 25768698.0
(22) Date of filing: 04.03.2025
(51) Int. Cl.: H01M 10/0562, C01D 15/04, H01M 10/058, H01M 10/052

(54) **SULFIDE-BASED SOLID ELECTROLYTE, METHOD FOR PRODUCING SAME, AND ALL-SOLID-STATE BATTERY COMPRISING SAME**

(30) Priority: 04.03.2024 KR 20240030860; 04.03.2024 KR 20240030861; 04.03.2024 KR 20240030862
(71) Applicant: LG Chem, Ltd., Seoul 07336 (KR)
(72) Inventor: JEON, Do Yeon, Daejeon 34122 (KR); CHUNG, Ha Bin, Daejeon 34122 (KR); KOO, Ja Pil, Daejeon 34122 (KR); PARK, Chang Hun, Daejeon 34122 (KR); KIM, In Gyu, Daejeon 34122 (KR); LEE, Dong Geon, Daejeon 34122 (KR); KIM, Jeong Heon, Daejeon 34122 (KR)
(74) Representative: Plasseraud IP
(86) International application number: PCT/KR2025/099542
(87) International publication number: WO 2025/188143

(57) **Abstract**

The present specification provides a sulfide-based solid electrolyte having an average crystal grain size of 200 nm or more and represented by Chemical Formula 1, a method of preparing the same, and an all-solid-state battery comprising the same.

## Description

### [Technical Field]

### Cross-Reference to Related Application

This application claims the benefit of priority to Korean Patent Application No. 10-2024-0030860, filed on March 4, 2024, Korean Patent Application No. 10-2024-0030861, filed on March 4, 2024, and Korean Patent Application No. 10-2024-0030862, filed on March 4, 2024, the disclosures of which are incorporated herein by reference in their entireties.

The present invention relates to a sulfide-based solid electrolyte, a method of preparing the same, and an all-solid-state battery comprising the same.

### [Background Art]

All-solid-state batteries are batteries in which a liquid electrolyte filling the space between the positive and negative electrodes of conventional secondary lithium batteries is replaced with a solid electrolyte. The all-solid-state battery is safe because a flammable solvent is not used in the battery and thus there is no risk of explosion. Also, the all-solid-state battery has attracted attention as a next-generation battery because Li metal or Li alloys can be used as a negative electrode material and thus the battery exhibits a higher energy density than conventional batteries.

The core material that constitutes a solid electrolyte comprises polymers, sulfides, oxides, and the like, and among them, a sulfide-based solid electrolyte having high ductility and high ionic conductivity is considered suitable for the manufacture of high-capacity, large-scale batteries.

A sulfide-based solid electrolyte represented by Li₆PS₅Cl and having an argyrodite crystal structure has a lithium ion conductivity of about 2 mS/cm, which is somewhat superior to conventional materials but is not satisfactory for application to next-generation technology that requires a high lithium ion conductivity of 5 mS/cm or more.

In order to further increase the ionic conductivity of the sulfide-based solid electrolyte having an argyrodite crystal structure, a method in which both Cl and Br are included as halogen elements doped into the sulfide-based solid electrolyte, and doped in an excessive amount of 1 or more is known. However, in the case of the sulfide-based solid electrolyte prepared by this method, when lithium metal is used as a negative electrode of an all-solid-state battery, the excessively doped halogen elements cause a side reaction with the lithium metal or positive electrode, and thus battery performance may be degraded.

Accordingly, there is a continuous demand for the development of an argyrodite sulfide-based solid electrolyte having high ionic conductivity that can be applied to next-generation technology.

### [Disclosure]

### [Technical Problem]

The present invention relates to a sulfide-based solid electrolyte having improved ionic conductivity, a method of preparing the same, and an all-solid-state battery comprising the same.

### [Technical Solution]

The present invention provides a sulfide-based solid electrolyte having an average crystal grain size of 200 nm or more and represented by the following Chemical Formula 1.

[Chemical Formula 1] LiₐP_{1-b}M_{b}S_{c}Cl_{d}Brₑ

In Chemical Formula 1,
M is one or more selected from the group consisting of Sb, Si, Ge, Sn, Cu, Ag, Mg, Ca, Al, As, Na, K, and Ga, and
5≤a≤7.5, 0≤b≤0.3, 0.5≤a-c≤1.5, 0<d≤1.5, 0<e≤1.5.

The present invention also provides a method of preparing the above-described sulfide-based solid electrolyte, which comprises mixing a lithium-containing compound, a phosphorus-containing compound, a sulfur-containing compound, a chlorine-containing compound, and a bromine-containing compound to prepare a mixture, and thermally treating the mixture.

The present invention also provides an all-solid-state battery, which comprises a positive electrode, a negative electrode, and a solid electrolyte layer provided between the positive electrode and the negative electrode, wherein the positive electrode or the solid electrolyte layer comprises the above-described sulfide-based solid electrolyte.

### [Advantageous Effects]

A sulfide-based solid electrolyte according to the present invention has an optimized crystal grain size, can have high ionic conductivity by being doped with a high concentration of halogen elements and appropriately adjusting a molar ratio of halogen and lithium elements, and exhibits high quality without an impurity phase.

In addition, since the sulfide-based solid electrolyte according to the present invention has a wide range of thermal treatment temperature for crystallization, a process window such as thermal treatment conditions in a mass production process can be improved, and accordingly, excellent quality and high yield can be secured in application in a mass production process.

### [Description of Drawings]

FIGS. 1 to 3 show the X-ray diffraction patterns of sulfide-based solid electrolytes prepared in Examples 1 to 3.
FIGS. 4 and 5 show the X-ray diffraction patterns of sulfide-based solid electrolytes prepared in Comparative Examples 1 and 2.

### [Best Mode]

Hereinafter, a sulfide-based solid electrolyte, a preparation method thereof, and a use thereof according to specific embodiments of the invention will be described in further detail.

Unless defined otherwise, all technical and scientific terms used herein are only used to describe exemplary embodiments and are not intended to limit the present invention. Singular expressions comprise plural expressions unless the context clearly indicates otherwise. In this specification, the term "comprise," "provide," or "have" is intended to designate the presence of the implemented features, numbers, steps, components, or combinations thereof, and it should be understood that it does not exclude in advance the presence or addition of other features, numbers, steps, components, or combinations thereof.

The present invention can be modified in various ways and can have several embodiments, and some embodiments will be described below in detail. However, this is not intended to limit the present invention to specific embodiments, and it should be understood to comprise all modifications, equivalents and substitutes included in the spirit and scope of the present invention.

In the present invention, "y is x1 or more" may be expressed as "x1≤y," and "y is x2 or less" may be expressed as "y≤x2." For example, "x1≤y≤x2" means that "y is x1 or more and x2 or less."

The present invention provides a sulfide-based solid electrolyte having an average crystal grain size of 200 nm or more and represented by the following Chemical Formula 1.

[Chemical Formula 1] LiₐP_{1-b}M_{b}S_{c}Cl_{d}Brₑ

In Chemical Formula 1,
M is one or more selected from the group consisting of Sb, Si, Ge, Sn, Cu, Ag, Mg, Ca, Al, As, Na, K, and Ga, and
5≤a≤7.5, 0≤b≤0.3, 0.5≤a-c≤1.5, 0<d≤1.5, 0<e≤1.5.

In the present invention, the sulfide-based solid electrolyte may have an average crystal grain size of 200 nm or more, preferably, 210 nm or more, 220 nm or more, 230 nm or more, 240 nm or more, 250 nm or more, or 300 nm or more, and 1,000 nm or less, 500 nm or less, 450 nm or less, or 400 nm or less. In the above numerical range, the elements and vacancies in a unit cell are well-ordered to facilitate Li ion hopping, and excellent lithium ion conductivity can be maintained.

A conventional solid electrolyte having an argyrodite crystal structure and represented by Li₆PS₅Cl as a basic composition has a structure in which a PS₄³⁻ structure is the main unit structure of the framework and the sites around the PS₄³⁻ structure are occupied by S and halogens surrounded by Li, and has low ionic conductivity.

However, the sulfide-based solid electrolyte of the present invention has improved ionic conductivity by adjusting an average crystal grain size to 200 nm or more.

The average crystal grain size may be determined by the Rietveld refinement calculation of an X-ray diffraction pattern. In the Rietveld refinement calculation, the Bruker's XRD analysis program, TOPAS, is used, and the following factors are reflected to consider instrumental peak broadening caused by a measuring instrument, Bruker's D8 Endeavor (Cu source).
1. X-ray beam divergence (0.5 degrees)
2. Detector type and size (1-D PSD, measurement area: 4.1 degrees)
3. Full axial method during axial convolution

A whole powder pattern decomposition method, which considers only the space group and lattice constant of a crystal phase as fits related to peak position and intensity, is used. As a term related to a crystal grain size, only "Cry Size L" in the "double-Voigt approach" is considered to obtain a final calculated value.

The average crystal grain size tends to increase as a thermal treatment temperature is higher, but when a thermal treatment temperature is increased beyond an appropriate level, an impurity phase is formed, which decreases ionic conductivity and adversely affects the quality and yield of a solid electrolyte. Therefore, when ionic conductivity is controlled by a crystal grain size, a thermal treatment temperature needs also to be considered.

As another method for increasing the ionic conductivity of a sulfide-based solid electrolyte having an argyrodite crystal structure, there is a method of limiting a composition.

In the present invention, the sulfide-based solid electrolyte may be represented by the following Chemical Formula 1.

[Chemical Formula 1] LiₐP_{1-b}M_{b}S_{c}Cl_{d}Brₑ

In Chemical Formula 1,
M is one or more selected from the group consisting of Sb, Si, Ge, Sn, Cu, Ag, Mg, Ca, Al, As, Na, K, and Ga, and
5≤a≤7.5, 0≤b≤0.3, 0.5≤a-c≤1.5, 0<d≤1.5, 0<e≤1.5.

In Chemical Formula 1, compositional fractions of lithium, phosphorus, sulfur, and M, that is, a, b, c, may satisfy 5≤a≤7.5, 0≤b≤0.3, and 0.5≤a-c≤1.5. When the compositional fraction of each element is adjusted within the above range, an argyrodite crystal structure is easily formed.

A molar ratio of halogen elements and lithium among lithium, phosphorus, sulfur, and M is related to ionic conductivity.

From a crystal structure perspective, the occupation of halogens instead of S at 4a and 4d sites in the argyrodite crystal structure creates a new Li ion migration path. In this case, when two or more types of halogens with different ionic radii are used, the site disorder of 4a and 4d anions increases, and thus a Li ion migration path shortens. Also, when the Li ion concentration in the composition is decreased to match the stoichiometry, Li vacancy sites are created to facilitate hopping, and as a result, ionic conductivity is improved.

In the present invention, a may satisfy 5≤a≤7.5, preferably, 5.1≤a≤7, 5.2≤a≤6.5, 5.3≤a≤6.2, 5.4≤a≤5.9, 5.5≤a≤5.8, or 5.5≤a≤5.6.

In the present invention, b may satisfy 0≤b≤0.3, preferably, 0≤b≤0.2, 0≤b≤0.1, 0≤b≤0.05, 0≤b≤0.02, or 0≤b≤0.01, or may be 0.

In the present invention, c may satisfy 5.5≤c≤9, preferably, 5.3≤c≤8.15, 5.1≤c≤7.3, 4.9≤c≤6.4, 4.7≤c≤5.5, or 4.45≤c≤4.65.

In the present invention, d may satisfy 0<d≤1.5, preferably, 0.15≤d≤1.4, 0.3≤d≤1.3, 0.45≤d≤1.2, 0.6≤d≤1.1, or 0.75≤d≤1.

In the present invention, e may satisfy 0<e≤1.5, preferably, 0.2≤e≤1.2, 0.35≤e≤1.1, 0.45≤e≤0.9, 0.55≤e≤0.85, or 0.65≤e≤0.75.

In the present invention, a-c may satisfy 0.5≤a-c≤1.5, preferably, 0.6≤a≤1.4, 0.7≤a≤1.3, 0.8≤a≤1.2, or 0.9≤a≤1.1.

In the present invention, the sulfide-based solid electrolyte may satisfy 1.32≤d+e≤1.58. Preferably, the value calculated by d+e may be 1.336 or more, 1.352 or more, 1.368 or more, 1.384 or more, 1.4 or more, 1.416 or more, 1.432 or more, 1.448 or more, 1.464 or more, or 1.48 or more. Also, the value calculated by d+e may be 1.57 or less, 1.56 or less, 1.54 or less, 1.53 or less, or 1.52 or less. In this case, when the substitution rate of halogens at the 4a and 4d sites in the unit lattice of the argyrodite crystal structure is increased, there is an effect of increasing the ionic conductivity of the solid electrolyte. In the above numerical range, the lattice structure is stabilized by halogen elements, and lithium ion migration is promoted, and thus the ionic conductivity of the solid electrolyte can be improved.

In the present invention, the sulfide-based solid electrolyte may satisfy 0.23≤(d+e)/a≤0.29. Preferably, the value calculated by (d+e)/a may be 0.234 or more, 0.238 or more, 0.242 or more, 0.246 or more, 0.25 or more, 0.254 or more, 0.258 or more, 0.262 or more, 0.266 or more, or 0.27 or more. Also, the value calculated by (d+e)/a may be 0.288 or less, 0.286 or less, 0.284 or less, 0.282 or less, or 0.28 or less. In the above numerical range, the lattice structure is stabilized by halogen elements, and lithium ion migration is promoted, and thus the ionic conductivity of the solid electrolyte can be improved.

In the present invention, the sulfide-based solid electrolyte may satisfy 0.1≤e/d<0.99. Preferably, the value calculated by e/d may be 0.18 or more, 0.25 or more, 0.33 or more, 0.4 or more, 0.48 or more, 0.56 or more, 0.63 or more, 0.71 or more, 0.78 or more, or 0.86 or more. Also, the value calculated by e/d may be 0.97 or less, 0.95 or less, 0.93 or less, 0.91 or less, or 0.89 or less. In the above numerical range, Cl and Br contents can be balanced. Specifically, the effect of Cl on stabilizing the lattice structure and the effect of Br on providing a lithium ion migration path are mutually balanced, and thus the ionic conductivity of the solid electrolyte can be further improved.

In the present invention, the sulfide-based solid electrolyte may be Li_{5.6}PS_{4.6}ClBr_{0.4}, Li_{5.5}PS_{4.5}ClBr_{0.5}, Li_{5.5}PS_{4.5}Cl_{0.8}Br_{0.7}, Li_{5.6}PS_{4.6}Cl_{0.8}Br_{0.6}, or Li_{5.5}PS_{4.5}Cl_{1.2}Br_{0.3}, preferably, Li_{5.5}PS_{4.5}Cl_{0.8}Br_{0.7}, Li_{5.5}PS_{4.5}ClBr_{0.5}, or Li_{5.5}PS_{4.5}Cl_{1.2}Br_{0.3}. This compound may achieve high ionic conductivity by optimally adjusting a total compositional fraction of halogen elements Cl and Br, a composition ratio thereof, and a molar ratio of lithium and halogen elements.

In the present invention, the sulfide-based solid electrolyte may have an argyrodite crystal structure. The argyrodite crystal structure may be identified by X-ray diffraction pattern analysis.

The sulfide-based solid electrolyte of the present invention may exhibit a first peak at one or more positions selected from the group consisting of diffraction angles (2θ) of 14° to 16°, 17° to 19°, 24° to 25.65°, 29.5° to 31°, 31° to 32°, and 44° to 46°, as determined by X-ray diffraction pattern analysis. The X-ray diffraction pattern may be a powder X-ray diffraction pattern according to Cu Kα radiation (wavelength=1.5406 Å). The first peak indicates that an argyrodite phase is formed. When the first peak appears, ionic conductivity may be improved.

In the present invention, the first peak may not be split. During the high-temperature thermal treatment in a process of preparing a sulfide-based solid electrolyte, an argyrodite decomposition phase, that is, an impurity phase, may be formed, and this is identified by the form in which the argyrodite peak is split into a doublet or triplet. However, in the present invention, peak splitting does not occur in the argyrodite peak range.

In the present invention, the sulfide-based solid electrolyte may not comprise an impurity phase. Generally, when the crystal grain size of a sulfide-based solid electrolyte increases, a crystal grain/grain boundary ratio increases, impurity segregation that blocks the conduction of lithium ions decreases, and the overall resistance is decreased due to a decrease in grain boundary resistance, thereby increasing the overall ionic conductivity. However, the sulfide-based solid electrolyte of the present invention does not comprise an impurity phase, and even when it comprises an impurity phase, the impurity phase is present at a negligible level that does not affect quality. In the present invention, a sulfide-based solid electrolyte which does not comprise an impurity phase may be obtained by appropriately adjusting a total compositional fraction of halogen elements Cl and Br and a composition ratio thereof.

Impurities present in a sulfide-based solid electrolyte cause a decrease in ionic conductivity, and the presence of an impurity phase also causes problems in terms of the quality and yield of a sulfide-based solid electrolyte.

The presence of an impurity phase in the present invention may be confirmed by measuring a powder X-ray diffraction pattern using Cu Kα radiation. In other words, the sulfide-based solid electrolyte not comprising an impurity phase does not exhibit a peak related to an impurity phase in the measurement of a powder X-ray diffraction pattern using Cu Kα radiation.

The peak related to an impurity phase is related to a thermal treatment temperature and may be identified by peak splitting related to the argyrodite decomposition phase in high-temperature thermal treatment, and low-temperature thermal treatment or an unreacted impurity phase may be identified by a specific range of peaks.

In the present invention, the impurity phase may be identified by a second peak appearing at one or more positions selected from the group consisting of 25.65° to 26.5°, 26.5° to 27.5°, 28.5° to 29.5°, and 33° to 35°. The impurities detected in this region may be a Li₂S, LiCl, LiBr, or LiClₐBr_{b} (LiCl/Br mixed phase) phase.

In the present invention, the sulfide-based solid electrolyte may have a value of 0.9 or more as calculated by the following Mathematical Formula 1. [Mathematical Formula 1] ${I}_{O} / \left({I}_{O}+{I}_{A}\right)$

In Mathematical Formula 1,
I_{O} is the intensity of a peak at a diffraction angle (2θ) of 24° to 25.65° in X-ray diffraction pattern analysis, and
I_{A} is the intensity of a peak at a diffraction angle (2θ) of 25.65° to 26.5°.

The value calculated by Mathematical Formula 1 represents the relationship between the intensity (I_{O}) of an argyrodite peak and the intensity (I_{A}) of an impurity peak. When an argyrodite peak is present and an impurity peak is not present, the value calculated by Mathematical Formula 1 is 1.

In the present invention, the value calculated by Mathematical Formula 1 may be 0.95 or more, 0.96 or more, 0.97 or more, 0.99 or more, 0.999 or more, or 1. The upper limit of the value calculated by Mathematical Formula 1 may be 1. In the above numerical range, an argyrodite peak may be present, but impurities corresponding to a diffraction angle (2θ) of 25.65° to 26.5° may not be present.

In the present invention, the sulfide-based solid electrolyte may have a value of 0.994 or more as calculated by the following Mathematical Formula 2. [Mathematical Formula 2] ${I}_{O} / \left({I}_{O}+{I}_{B}\right)$

In Mathematical Formula 2,
I_{O} is the intensity of a peak at a diffraction angle (2θ) of 24° to 25.65° in X-ray diffraction pattern analysis, and
I_{B} is the intensity of a peak at a diffraction angle (2θ) of 28.5° to 29.5°.

The value calculated by Mathematical Formula 2 represents the relationship between the intensity (I_{O}) of an argyrodite peak and the intensity (I_{B}) of an impurity peak. When an argyrodite peak is present and an impurity peak is not present, the value calculated by Mathematical Formula 2 is 1.

In the present invention, the value calculated by Mathematical Formula 2 may be 0.995 or more, 0.996 or more, 0.997 or more, 0.998 or more, 0.999 or more, or 1. The upper limit of the value calculated by Mathematical Formula 1 may be 1. In the above numerical range, an argyrodite peak may be present, but impurities corresponding to a diffraction angle (2θ) of 28.5° to 29.5° may not be present.

In the present invention, the sulfide-based solid electrolyte may have a value of 0.99 or more as calculated by the following Mathematical Formula 3. [Mathematical Formula 3] ${I}_{O} / \left({I}_{O}+{I}_{C}\right)$

In Mathematical Formula 3,
I_{O} is the intensity of a peak at a diffraction angle (2θ) of 24° to 25.65° in X-ray diffraction pattern analysis, and
I_{C} is the intensity of a peak at a diffraction angle (2θ) of 33° to 35°.

The value calculated by Mathematical Formula 3 represents the relationship between the intensity (I_{O}) of an argyrodite peak and the intensity (I_{C}) of an impurity peak. When an argyrodite peak is present and an impurity peak is not present, the value calculated by Mathematical Formula 3 is 1.

In the present invention, the value calculated by Mathematical Formula 3 may be 0.992 or more, 0.994 or more, 0.996 or more, 0.998 or more, 0.999 or more, or 1. The upper limit of the value calculated by Mathematical Formula 3 may be 1. In the above numerical range, an argyrodite peak may be present, but impurities corresponding to a diffraction angle (2θ) of 33° to 35° may not be present.

The sulfide-based solid electrolyte of the present invention may have a process window parameter of 100 °C or higher as calculated by the following Mathematical Formula 4. [Mathematical Formula 4] $ΔT = {T}_{H} - {T}_{L}$

In Mathematical Formula 4,
T_{H} is a thermal treatment process temperature of the sulfide-based solid electrolyte, specifically, a maximum thermal treatment temperature satisfying one or more of first to third physical properties, and
T_{L} is a thermal treatment process temperature of the sulfide-based solid electrolyte, specifically, a minimum thermal treatment temperature satisfying one or more of first to third physical properties.

First physical property: An ionic conductivity at 22 °C is 6 mS/cm or more.

Second physical property: An average crystal grain size is 200 nm or more.

Third physical property: An impurity phase is not included.

In the present invention, the process window parameter calculated by Mathematical Formula 4 may be calculated by preparing a solid electrolyte while changing the thermal treatment temperature of a sulfide-based solid electrolyte, measuring and comparing the physical properties of the prepared solid electrolyte, and obtaining T_{H} and T_{L} at a boundary temperature satisfying the physical property parameter. The detailed method will be described below.

When the process window parameter satisfies the above numerical range, ionic conductivity can be excellent, and a thermal treatment temperature range that allows an impurity phase to be not formed can be wider compared to other solid electrolytes. Since the wide thermal treatment temperature range for preparing a high-quality solid electrolyte means that a thermal treatment temperature is easily adjusted in mass production and it is unlikely that a low-quality solid electrolyte will be prepared outside the thermal treatment temperature range, it is advantageous in terms of quality and yield in mass production.

In the present invention, the process window parameter calculated by Mathematical Formula 4 may be 100 °C or higher, preferably, higher than 100 °C, 110 °C or higher, 120 °C or higher, 130 °C or higher, or 140 °C or higher. As the process window parameter is higher, a thermal treatment temperature range in which physical properties are excellent is wider. Therefore, although there is no particular limitation on the upper limit, the process window parameter may be 200 °C or lower or 180 °C or lower.

In the present invention, T_{H} satisfies the first physical property.

In the present invention, T_{H} satisfies the second physical property.

In the present invention, T_{H} satisfies the third physical property.

In the present invention, T_{H} satisfies the first to third physical properties.

In the present invention, T_{L} satisfies the first physical property.

In the present invention, T_{L} satisfies the second physical property.

In the present invention, T_{L} satisfies the third physical property.

In the present invention, T_{L} satisfies the first to third physical properties.

A conventional thermal treatment temperature range varies depending on the doping concentration of halogen elements and tends to narrow as the doping concentration increases, whereas in the present invention, a high-quality sulfide-based solid electrolyte having high ionic conductivity and not comprising impurities can be obtained even in a wide thermal treatment temperature range by appropriately adjusting a composition ratio (doping concentration) of halogen elements Cl and Br and a molar ratio of lithium and halogen elements.

In the present invention, the sulfide-based solid electrolyte may have an ionic conductivity of 6 mS/cm or more, preferably, 7 mS/cm or more, 8 mS/cm or more, 8.7 mS/cm or more, 9 mS/cm or more, 10 mS/cm or more, 10.5 mS/cm or more, 11 mS/cm or more, or 12 mS/cm or more at 22 °C. Although there is no particular limitation on the upper limit, the ionic conductivity may be 50 mS/cm or less. In the above numerical range, lithium ion conductivity may be sufficient for operating a lithium battery. The measurement temperature, 22 °C, may refer to the ambient temperature of the measurement environment. Meanwhile, the ionic conductivity may be measured at a relative humidity of 0.7%.

In the present invention, the sulfide-based solid electrolyte has lithium ion conductivity sufficient for operating a lithium battery at room temperature, that is, 22 °C and specifically has an ionic conductivity of 6.0 mS/cm or more and 15.0 mS/cm or less. According to an embodiment, the sulfide-based solid electrolyte of the present invention has an ionic conductivity of 6 mS/cm or more, and has an ionic conductivity of 8.0 mS/cm or more or 8.5 mS/cm or more when a thermal treatment temperature is 500 °C. Also, an ionic conductivity is 6 mS/cm or more in a wide thermal treatment temperature range of 300 °C to 600 °C. In this case, the ionic conductivity is the ionic conductivity after the thermally treated powder is ground using a mortar and may refer to the ionic conductivity of the solid electrolyte before performing an ultrafine grinding process for particle size control.

The ionic conductivity is derived from a resistance value of the Nyquist plot obtained by inputting 0.15 g of the sulfide-based solid electrolyte into a 13ϕ SUS mold, applying a pressure of 370 MPa to sufficiently densify the electrolyte structure, then slowly lowering the pressure, and measuring AC impedance in the measurement frequency range of 1 Hz to 7 MHz with an amplitude of 10 mV while maintaining a pressure of 100 MPa. All measurements are performed in a dry room at a temperature of 22 °C and a relative humidity of 0.7%.

The present invention also provides a method of preparing the above-described sulfide-based solid electrolyte, which comprises mixing a lithium-containing compound, a phosphorus-containing compound, a sulfur-containing compound, a chlorine-containing compound, and a bromine-containing compound to prepare a mixture, and thermally treating the mixture.

In the present invention, the step of thermally treating the mixture is performed in a thermal treatment temperature range of a process window parameter (ΔT=T_{H}-T_{L}) which represents the difference between a maximum thermal treatment temperature (T_{H}) and a minimum thermal treatment temperature (T_{L}), and the process window parameter may be 100 °C or higher.

The method of preparing the sulfide-based solid electrolyte according to the present invention has a wide process window range. The wide process window range means that a range of combinations of process variables capable of maintaining the excellent physical properties of the prepared sulfide-based solid electrolyte is wide.

The method of preparing the sulfide-based solid electrolyte according to the present invention is characterized in that a process window corresponding to a thermal treatment temperature has a wide range, and the process window may be expressed as a process window parameter (ΔT=T_{H}-T_{L}) which is the difference between a maximum thermal treatment temperature (T_{H}) and a minimum thermal treatment temperature (T_{L}).

As will be described below, the maximum thermal treatment temperature refers to the highest thermal treatment temperature in the range in which the physical properties of the prepared sulfide-based solid electrolyte are maintained, and the minimum thermal treatment temperature refers to the lowest thermal treatment temperature in the range in which the physical properties of the prepared sulfide-based solid electrolyte are maintained. A thermal treatment temperature is an important factor that affects the crystallization of a sulfide-based solid electrolyte and is difficult to control in a large-scale process.

Since a conventional method of preparing a sulfide-based solid electrolyte has a narrow process window range, there are a limitation in that excessive effort and trial and error are required to maintain a temperature within a narrow range during a thermal treatment process, and a problem in that the physical properties of the sulfide-based solid electrolyte prepared outside a process window range are degraded.

The present invention has the effect of minimizing trial and error for a temperature change in a large-scale process by having a wide process window parameter range in which excellent physical properties are maintained and setting predetermined maximum and minimum thermal treatment temperatures.

In the present invention, the process window parameter may be 100 °C or higher, preferably, higher than 100 °C, 110 °C or higher, 120 °C or higher, 130 °C or higher, or 140 °C or higher. As the process window parameter is higher, a thermal treatment temperature range in which physical properties are excellent is wider. Therefore, although there is no particular limitation on the upper limit, the process window parameter may be 300 °C or lower or 200 °C or lower. In the above numerical range, it is possible to prepare a sulfide-based solid electrolyte having excellent physical properties even in a wide temperature range, which is advantageous for a large-scale process.

In the present invention, the method of preparing the sulfide-based solid electrolyte may comprise pre-determining a maximum thermal treatment temperature (T_{H}); pre-determining a minimum thermal treatment temperature (T_{L}); and pre-setting the maximum thermal treatment temperature and the minimum thermal treatment temperature in the step of thermally treating the mixture. In this case, by pre-determining a maximum thermal treatment temperature (T_{H}) and a minimum thermal treatment temperature (T_{L}) and setting the thermal treatment temperatures in process equipment before a large-scale process for preparing a final sulfide-based solid electrolyte, unnecessary repetitive work can be minimized, and preparatory work required for a large-scale process can be completed at low cost and high efficiency. Here, the step of pre-setting the maximum thermal treatment temperature and the minimum thermal treatment temperature may be pre-setting the operating temperature of thermal treatment equipment used in the step of thermally treating the mixture.

In each of the step of pre-determining a maximum thermal treatment temperature (T_{H}) and the step of pre-determining a minimum thermal treatment temperature (T_{L}), a sample mixture may be used.

In the present invention, the sample mixture is differentiated from the mixture used in the above-described step of thermally treating the mixture and is used to determine a maximum thermal treatment temperature and a minimum thermal treatment temperature. In other words, the sample mixture may be used in a smaller amount than the mixture of the present invention. For example, an amount of 10% or less or 1% or less may be used.

In the present invention, the step of determining a maximum thermal treatment temperature (T_{H}) comprises mixing a lithium-containing compound, a phosphorus-containing compound, a sulfur-containing compound, a chlorine-containing compound, and a bromine-containing compound to prepare a sample mixture; repeatedly increasing a thermal treatment temperature by T_{X} starting from an initial thermal treatment temperature (T₀) n1 times; determining whether a physical property parameter is satisfied or not for each round; measuring a temperature (T_{F}) at which the physical property parameter is not satisfied for the first time; and determining a value obtained by subtracting T_{X} from T_{F} as a maximum thermal treatment temperature (T_{H}). For example, as a result of determining whether a physical property parameter is satisfied or not while repeatedly increasing a temperature by 20 °C (T_{X}) starting from an initial thermal treatment temperature (T₀) of 400 °C, when the physical property parameter is not satisfied for the first time at 520 °C at the 6^{th} (n1) round, a maximum thermal treatment temperature (T_{H}) is 500 °C (520 °C-20 °C).

In the present invention, the step of determining a minimum thermal treatment temperature (T_{L}) comprises mixing a lithium-containing compound, a phosphorus-containing compound, a sulfur-containing compound, a chlorine-containing compound, and a bromine-containing compound to prepare a sample mixture; repeatedly decreasing a thermal treatment temperature by T_{X} starting from an initial thermal treatment temperature (T₀) n2 times; determining whether a physical property parameter is satisfied or not for each round; measuring a temperature (T_{I}) at which the physical property parameter is not satisfied for the first time; and determining a value obtained by adding T_{I} and T_{X} as a minimum thermal treatment temperature (T_{L}). For example, as a result of determining whether a physical property parameter is satisfied or not while repeatedly decreasing a temperature by 20 °C (T_{X}) starting from an initial thermal treatment temperature (T₀) of 400 °C, when the physical property parameter is not satisfied for the first time at 340 °C at the 3^{rd} (n2) round, a minimum thermal treatment temperature (T_{L}) is 360 °C (340 °C+20 °C).

In the present invention, the initial thermal treatment temperature (T₀) is any process starting temperature, and refers to a thermal treatment temperature that satisfies one or more of first to third physical properties to be described below. The initial thermal treatment temperature (T₀) may be selected within a temperature range of 300 °C to 600 °C. For example, T₀ may be 400 °C, 420 °C, 440 °C, 460 °C, 480 °C, 500 °C, or 520 °C.

In the present invention, T_{X} represents a thermal treatment temperature interval between rounds and may be selected in consideration of the number of rounds. Preferably, T_{X} may be 10 °C, 15 °C, or 20 °C.

In the present invention, n1 and n2 represent the number of times a thermal treatment temperature is changed and may each be 1 to 20.

In the present invention, the step of thermally treating the mixture comprises pre-setting the maximum thermal treatment temperature and the minimum thermal treatment temperature. In this case, a thermal treatment temperature may be maintained within the range between the maximum thermal treatment temperature (T_{H}) and the minimum thermal treatment temperature (T_{L}). This step may be pre-setting the maximum thermal treatment temperature and the minimum thermal treatment temperature in equipment used in the thermal treatment.

In the present invention, at all of the thermal treatment temperatures corresponding to the process window parameter, the prepared sulfide-based solid electrolyte may satisfy one or more of the following first to third physical properties.

First physical property: An ionic conductivity at 22 °C is 6 mS/cm or more.

Second physical property: An average crystal grain size is 200 nm or more.

Third physical property: An impurity phase is not included.

In the present invention, satisfying specific physical properties at all of the thermal treatment temperatures corresponding to the process window parameter means that the sulfide-based solid electrolyte prepared at any thermal treatment temperature selected within the range between the maximum thermal treatment temperature (T_{H}) and the minimum thermal treatment temperature (T_{L}) satisfies the above physical properties, and that a sulfide-based solid electrolyte not satisfying the physical properties is not present.

In the present invention, the process window parameter may be calculated by the following Mathematical Formula 4. [Mathematical Formula 4] $ΔT = {T}_{H} - {T}_{L}$

In Mathematical Formula 4,
T_{H} is the maximum thermal treatment temperature at which the prepared sulfide-based solid electrolyte satisfies one or more of the following first to third physical properties among thermal treatment temperatures in the step of thermally treating the mixture, and
T_{L} is the minimum thermal treatment temperature at which the prepared sulfide-based solid electrolyte satisfies one or more of the following first to third physical properties among thermal treatment temperatures in the step of thermally treating the mixture.

First physical property: An ionic conductivity at 22 °C is 6 mS/cm or more.

Second physical property: An average crystal grain size is 200 nm or more.

Third physical property: An impurity phase is not included.

In the present invention, the first to third physical properties may be named physical property parameters.

In the present invention, the maximum thermal treatment temperature (T_{H}) and the minimum thermal treatment temperature (T_{L}) is a boundary condition for constructing the process window parameter and may each satisfy any one of the first to third physical properties.

In the present invention, T_{H} may satisfy the first physical property.

In the present invention, T_{H} may satisfy the second physical property.

In the present invention, T_{H} may satisfy the third physical property.

In the present invention, T_{H} may satisfy the first and second physical properties.

In the present invention, T_{H} may satisfy the first to third physical properties.

In the present invention, T_{L} may satisfy the first physical property.

In the present invention, T_{L} may satisfy the second physical property.

In the present invention, T_{L} may satisfy the third physical property.

In the present invention, T_{L} may satisfy the first and second physical properties.

In the present invention, T_{L} may satisfy the first to third physical properties.

In the present invention, the process window parameter satisfying the first physical property may be 110 °C or higher, preferably, 120 °C or higher, 130 °C or higher, 130 °C or higher, or 140 °C or higher.

In the present invention, the process window parameter (ΔT=T_{H}-T_{L}) satisfying the second physical property may be 110 °C or higher, preferably, 120 °C or higher, 130 °C or higher, 130 °C or higher, or 140 °C or higher.

In the present invention, the description of ionic conductivity to be described below may be applied as the first physical property. Specifically, an ionic conductivity at 22 °C may be 6 mS/cm or more, preferably, 7 mS/cm or more, 8 mS/cm or more, 8.7 mS/cm or more, 9 mS/cm or more, 10 mS/cm or more, 10.5 mS/cm or more, 11 mS/cm or more, or 12 mS/cm or more. Although there is no particular limitation on the upper limit, the ionic conductivity may be 50.0 mS/cm or less. In the above numerical range, lithium ion conductivity may be sufficient for operating a lithium battery. The measurement temperature, 22 °C, may refer to the ambient temperature of the measurement environment. Meanwhile, the ionic conductivity may be measured at a relative humidity of 0.7%.

In the present invention, the description of an average crystal grain size to be described below may be applied as the second physical property.

In the present invention, the description of impurities to be described below may be applied as the third physical property. Specifically, the description of Mathematical Formulas 1 to 3 may be applied.

In the present invention, the maximum thermal treatment temperature (T_{H}) may be 580 °C, 570 °C, 560 °C, 550 °C, 540 °C, 530 °C, 520 °C, 510 °C, or 500 °C.

In the present invention, the minimum thermal treatment temperature (T_{L}) may be 300 °C, 320 °C, 340 °C, 360 °C, 380 °C, 420 °C, 460 °C, or 480 °C. The thermal treatment temperature may be the temperature of the atmosphere inside thermal treatment equipment in which the process proceeds or the temperature of the surface of the mixture subjected to thermal treatment, and may be confirmed by a numerical value displayed on a thermostat attached to the thermal treatment equipment.

In the present invention, the step of thermally treating the mixture is a step of thermally treating the mixture so as to have an argyrodite crystal structure. The step of thermally treating the mixture may be performed within a temperature range in which a sulfide-based solid electrolyte has an argyrodite crystal structure.

In the present invention, the step of thermally treating the mixture may be performed for 1 hour to 20 hours, preferably, 3 hours to 16 hours or 5 hours to 13 hours. In the above numerical range, the material is not damaged, and the argyrodite crystal structure can be easily formed.

In the present invention, the step of thermally treating the mixture may be performed in an inert atmosphere. Specifically, the inert atmosphere may be an Ar atmosphere, a N₂ atmosphere, a H₂S atmosphere, a vacuum, or a combination thereof.

The method of preparing the sulfide-based solid electrolyte according to the present invention comprises mixing a lithium-containing compound, a phosphorus-containing compound, a sulfur-containing compound, a chlorine-containing compound, and a bromine-containing compound to prepare a mixture.

In the present invention, the lithium-containing compound may be a lithium compound such as lithium sulfide (Li₂S), lithium oxide (Li₂O), or lithium carbonate (Li₂CO₃), or simply lithium metal.

In the present invention, the phosphorus-containing compound may be, for example, a phosphorus sulfide such as diphosphorus trisulfide (P₂S₃) or diphosphorus pentasulfide (P₂S₅), a phosphorus compound such as sodium phosphate (Na₃PO₄), or simply phosphorus.

In the present invention, the sulfur-containing compound may be sulfur (S₈), lithium sulfide, or phosphorus sulfide.

In the present invention, the chlorine-containing compound and the bromine-containing compound may each be a compound represented by QX. Here, Q may be Li, P, S, Sb, Si, Ge, Sn, Cu, Ag, Mg, Ca, Al, As, Na, K, Ga, or a combination of an element thereof with an oxygen or sulfur element, and X is Cl or Br.

In the present invention, the chlorine-containing compound may be LiCl, PCl₃, PCl₅, POCl₃, P₂Cl₄, SCl₂, S₂Cl₂, SbCl₃, SbCl₅, SiCl₄, SiCl₃, Si₂Cl₆, SiBrCl₃, SiBr₂Cl₂, GeCl₄, GeCl₂, SnCl₄, SnCl₂, CuCl₂, CuCl₃, AgCl, MgCl, MgCl₂, MgCl₃, CaCl₂, AlCl, AlCl₂, AlCl₃, AsCl₃, NaCl, NaCl₂, NaCl₃, Na₃Cl₂, KCl, KCl₂, KCl₃, GaCl₂, GaCl₃, or GaCl₅, preferably LiCl, PCl₅, or PCl₃, and more preferably LiCl.

In the present invention, the bromine-containing compound may be LiBr, PBr₃, POBr₃, S₂Br₂, SbBr₃, SiBr₄, SiBrCl₃, SiBr₂Cl₂, GeBr₄, GeBr₂, SnBr₄, SnBr₂, CuBr₂, AgBr, MgBr, MgBr₂, MgBr₃, CaBr₂, AlBr₃, AsBr₃, NaBr, KBr, KBr₂, KBr₃, or GaBr₃, preferably LiBr, PBr₅, or PBr₃, and more preferably LiBr and PBr₃.

In the present invention, the mixture may be further mixed with an M-containing compound. Here, M may be one or more selected from Sb, Si, Ge, Sn, Cu, Ag, Mg, Ca, Al, As, Na, K, and Ga.

In the present invention, the M-containing compound may be Sb, Si, Ge, Sn, Cu, Ag, Mg, Ca, Al, As, Na, K, Ga, or a combination of an element thereof with an oxygen, sulfur, or halogen element (Cl or Br).

In the present invention, the M-containing compound may be a sulfide comprising one or more elements of Sb, Si, Ge, Sn, Cu, Ag, Mg, Ca, Al, As, Na, K, and Ga. For example, the M-containing compound may be any one of Sb₂S₃, SiS₂, GeS₂, SnS₂, CuS₂, AgS₂, MgS, CaS, Al₂S₃, As₂S₃, Na₂S, K₂S, and Ga₂S₃.

In the present invention, the content ratio of the lithium-containing compound, the phosphorus-containing compound, the sulfur-containing compound, the chlorine-containing compound, and the bromine-containing compound may be adjusted depending on the molar ratio of components of the finally prepared sulfide-based solid electrolyte, and is not particularly limited in the present invention.

In the present invention, the step of mixing a lithium-containing compound, a phosphorus-containing compound, a sulfur-containing compound, a chlorine-containing compound, and a bromine-containing compound to prepare a mixture may be performed by pulverization and mixing processes. Specifically, pulverization and mixing may be performed by applying mechanical energy using a bead mill, a planetary ball mill, a planetary mill, mechano fusion, a mortar, or an automatic grinder. If necessary, a non-polar organic solvent such as toluene, xylene, heptane, octane, or anisole may be added. The material of the balls used in the pulverization and mixing is not particularly limited, and for example, alumina balls, zirconia balls, stainless balls, silicon nitride balls, or tungsten carbide balls may be used.

In the present invention, when a planetary ball mill is used as a pulverization device, pulverization and mixing may be performed at a rotational speed of 100 rpm to 2,000 rpm for 1 hour to 50 hours, but the present invention is not limited thereto. Preferably, 10 mm zirconia balls are input into a planetary ball mill, pulverization is performed at a speed of 400 rpm to 700 rpm, and then additional pulverization is performed using a mortar or an automatic grinder.

In the present invention, the step of thermally treating the mixture is a step of thermally treating the mixture so as to have an argyrodite crystal structure. The step of thermally treating the mixture may be performed within a temperature range in which a sulfide-based solid electrolyte has an argyrodite crystal structure.

In the present invention, the step of thermally treating the mixture may be performed at a maximum thermal treatment temperature (T_{H}) and a minimum thermal treatment temperature (T_{L}), wherein the maximum thermal treatment temperature may be 600 °C or lower, and the minimum thermal treatment temperature may be 300 °C or higher. Specifically, this step may be performed at the minimum thermal treatment temperature and maximum thermal treatment temperature preset during the process while maintaining a thermal treatment temperature within the range between the minimum thermal treatment temperature and the maximum thermal treatment temperature. The T_{H} and T_{L} are the same as described above.

In the present invention, the step of thermally treating the mixture may be performed at a thermal treatment temperature within the range between the maximum thermal treatment temperature (T_{H}) and the minimum thermal treatment temperature (T_{L}). For example, when the maximum thermal treatment temperature (T_{H}) is 580 °C and the minimum thermal treatment temperature (T_{L}) is 300 °C, the thermal treatment may be performed in a temperature range of 300 °C to 580 °C.

When a thermal treatment temperature in the step of thermally treating the mixture is maintained within the range between the maximum thermal treatment temperature (T_{H}) and the minimum thermal treatment temperature (T_{L}), a high-quality sulfide-based solid electrolyte having excellent ionic conductivity and not comprising an impurity phase can be obtained.

Since the method of preparing the sulfide-based solid electrolyte according to the present invention has a wide thermal treatment temperature range for preparing a high-quality solid electrolyte, a thermal treatment temperature is easily adjusted in mass production, and thus a process window can be improved, and excellent quality and yield can be secured.

In the present invention, the step of thermally treating the mixture may be performed for 1 hour to 20 hours, preferably, 3 hours to 16 hours or 5 hours to 13 hours. In the above numerical range, the material is not damaged, and the argyrodite crystal structure can be easily formed.

In the present invention, the step of thermally treating the mixture may be performed in an inert atmosphere. Specifically, the inert atmosphere may be an Ar atmosphere, a N₂ atmosphere, a H₂S atmosphere, a vacuum, or a combination thereof.

The method of preparing the sulfide-based solid electrolyte according to the present invention may comprise, after the step of thermally treating the mixture, pulverizing the thermally treated material, classifying the thermally treated material, or a combination thereof. The sulfide-based solid electrolyte prepared through the thermal treatment is further subjected to subsequent processes such as pulverization and/or classification.

In the present invention, the step of pulverizing the thermally treated material may be performed using either dry pulverization or wet pulverization. Specifically, one or more of them may be used, and they may be used in combination or may be performed multiple times such as two or more times

In the present invention, there is no particular limitation on the device used in the pulverization as long as the purpose of the present invention is achieved, and for example, a method such as medium-type pulverization such as a bead mill or a planetary ball mill, jet pulverization, or cavitation pulverization may be used. Among them, a bead mill or a planetary ball mill is preferred. The pulverization conditions may be set so as to pulverize a solid electrolyte to a desired particle size.

In the present invention, dry pulverization is performed by inputting sulfide-based solid electrolyte particles, which are the target of pulverization, in a dry state into a device such as a ball mill. Wet pulverization is performed by dispersing sulfide-based solid electrolyte particles in an organic solvent and pulverizing the resulting slurry.

In the present invention, as the organic solvent that can be used in the wet pulverization, one or more of an aliphatic organic solvent such as heptane, decane, hexane, or cyclohexane; and an aromatic organic solvent such as toluene, xylene, 1,2,4-trimethylbenzene, anisole, dimethoxybenzene, chlorobenzene, ethyl benzoate, or benzyl acetate are used. In this case, the slurry concentration for wet pulverization preferably ranges from 2 wt% to 60 wt%, and more preferably, from 10 wt% to 50 wt%.

In the present invention, the step of classifying the thermally treated material may be performed after the step of pulverizing the thermally treated material.

In the present invention, when the pulverization step is wet pulverization, the organic solvent may be removed through a drying process before the step of classifying the pulverized material, and if necessary, a solid-liquid separation process such as filtration, centrifugation, pressure filtration, or vacuum filtration may be further performed to separate the solid electrolyte particles and the organic solvent before the drying process.

The present invention also provides an all-solid-state battery which comprises a positive electrode, a negative electrode, and a solid electrolyte layer provided between the positive electrode and the negative electrode, wherein the positive electrode or the solid electrolyte layer comprises the above-described sulfide-based solid electrolyte.

Specifically, the all-solid-state battery comprises a positive electrode comprising a positive electrode active material, a negative electrode comprising a negative electrode active material, and a solid electrolyte layer disposed between the positive electrode and the negative electrode. In this case, the sulfide-based solid electrolyte according to the present invention may be introduced into one or more of the positive electrode and the solid electrolyte layer.

In the present invention, since the composition of halogen elements and the molar ratio of halogen and lithium elements in the sulfide-based solid electrolyte may be adjusted so that a solid electrolyte has high ionic conductivity, when an all-solid-state battery is manufactured using the solid electrolyte, battery performance can be improved.

The all-solid-state battery of the present invention may be produced by a typical method known in the art. For example, the all-solid-state battery may be produced by laminating a solid electrolyte layer between a positive electrode and a negative electrode and applying pressure to the laminate. In this case, the solid electrolyte layer may be adjusted to have various thicknesses by adjusting the performance of the all-solid-state battery and various process parameters, and the thickness may preferably be 1 to 10 mm, and more preferably, 3 to 4 mm.

In the present invention, the positive electrode comprises a positive electrode current collector and a positive electrode active material layer formed on the positive electrode current collector.

The positive electrode active material layer comprises a positive electrode active material, a binder, a conductive material, and a solid electrolyte. The positive electrode may be manufactured by applying a positive electrode slurry comprising a positive electrode active material, a binder, a conductive material, a solid electrolyte, and a solvent onto a positive electrode current collector, or may be manufactured in the form of a dry electrode by not comprising a solvent.

The positive electrode current collector is not particularly limited as long as it does not cause a chemical change in the battery and has conductivity, and for example, stainless steel, aluminum, nickel, titanium, calcined carbon, or aluminum or stainless steel whose surface has been treated with carbon, nickel, titanium, silver, or the like may be used. Also, the positive electrode current collector may have fine irregularities formed on its surface to strengthen the bonding strength of the positive electrode active material, and may be used in various forms such as films, sheets, foils, nets, porous materials, foams, non-woven materials, and the like.

The positive electrode active material is a compound capable of reversibly intercalating and deintercalating lithium and may specifically comprise a lithium metal oxide comprising lithium and one or more metals such as cobalt, manganese, nickel, and aluminum.

More specifically, the lithium metal oxide may be a lithium-manganese-based oxide (LMO; e.g., LiMnO₂, LiMn₂O₄, etc.), a lithium-cobalt-based oxide (LCO; e.g., LiCoO₂, etc.), a lithium-nickel-based oxide (LNO, e.g., LiNiO₂, etc.), a lithium-nickel-manganese-based oxide (LNMO; e.g., LiNi_{1-Y}Mn_{Y}O₂ (where 0<Y<1), LiMn_{2-z}Ni_{z}O₄ (where 0<Z<2), etc.), a lithium-nickel-cobalt-based oxide (NC, e.g., LiNi_{1-Y1}Co_{Y1}O₂ (where 0<Y1<1), etc.), a lithium-manganese-cobalt-based oxide (NCM; e.g., LiCo_{1-Y2}Mn_{Y2}O₂ (where 0<Y2<1), LiMn_{2-z1}Co_{z1}O₄ (where 0<Z1<2), etc.), a lithium-nickel-manganese-cobalt-based oxide (NCM; e.g., Li(NiₚCo_{q}Mnᵣ₁)O₂ (where 0<p<1, 0<q<1, 0<r1<1, and p+q+r1=1), Li(Niₚ₁Co_{q1}Mnᵣ₂)O₄ (where 0<p1<2, 0<q1<2, 0<r2<2, and p1+q1+r2=2), etc.), a lithium-nickel-cobalt-transition metal (M) oxide (e.g., Li(Niₚ₂Co_{q2}Mnᵣ₃Mₛ₂)O₂ (where M is selected from the group consisting of Al, Fe, V, Cr, Ti, Ta, Mg, and Mo, p2, q2, r3, and s2 are atomic fractions of each independent element, and 0<p2<1, 0<q2<1, 0<r3<1, 0<s2<1, p2+q2+r3+s2=1), etc.), or a lithium-iron phosphate oxide (LFP; e.g., Li ₍₃₋ₜ₎Fe₂ (PO₄)₃ (0≤t≤2), Li_{w}FePO₄ (0.90≤w≤1.8), etc.).

Considering the improvement of the capacity characteristics and stability of the battery, it is more preferable that the lithium metal oxide is LiCoO₂, LiMnO₂, LiNiO₂, a lithium-nickel-manganese-cobalt oxide (e.g., Li(Ni_{1/3}Mn_{1/3}Co_{1/3})O₂, Li(Ni_{0.6}Mn_{0.2}Co_{0.2})O₂, Li(Ni_{0.5}Mn_{0.3}Co_{0.2})O₂, Li(Ni_{0.7}Mn0₁₅Co_{0.15})O₂, Li(Ni_{0.8}Mn_{0.1}Co_{0.1})O₂, etc.), or a lithium-nickel-cobalt-aluminum oxide (e.g., Li(Ni_{0.8}Co_{0.15}Al_{0.05})O₂, etc.).

Considering the remarkable improvement effect according to the type and content ratio of components forming the lithium composite metal oxide, it is more preferable that the lithium composite metal oxide is Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, or Li(Ni_{0.8}Mn_{0.1}Co_{0.1})O₂.

The positive electrode active material may be included in an amount of 60 wt% to 99 wt%, preferably 65 wt% to 99 wt%, and more preferably 70 wt% to 98 wt% based on a total solid content excluding the solvent in the positive electrode slurry.

As the solid electrolyte, one or more selected from a polymer-based solid electrolyte, a sulfide-based solid electrolyte, and an oxide-based solid electrolyte may be used, and according to an embodiment of the present invention, a sulfide-based solid electrolyte is used as the solid electrolyte.

When the sulfide-based solid electrolyte of the present invention is used in the positive electrode, a side reaction between the positive electrode active material and the solid electrolyte is suppressed, and thus the degradation of ionic conductivity resulting from the side reaction may be prevented.

The solid electrolyte may be included in an amount of 1 wt% to 45 wt%, preferably 1 wt% to 40 wt%, and more preferably 5 wt% to 30 wt% based on a total solid content excluding the solvent in the positive electrode slurry.

The binder is a component that helps the binding of the conductive material, the active material, and the current collector. Examples of the binder comprise polyvinylidene fluoride, polyvinyl alcohol, carboxymethyl cellulose, starch, hydroxypropyl cellulose, regenerated cellulose, polyvinylpyrrolidone, tetrafluoroethylene, polyethylene, polypropylene, an ethylenepropylene-diene monomer (EPDM), a sulfonated EPDM, styrene-butadiene rubber, a fluoroelastomer, and various copolymers thereof.

Typically, the binder may be included in an amount of 1 wt% to 20 wt%, preferably 1 wt% to 15 wt%, and more preferably 1 wt% to 10 wt% based on a total solid content excluding the solvent in the positive electrode slurry.

The conductive material is a component for further improving the conductivity of the positive electrode active material.

The conductive material is not particularly limited as long as it does not cause a chemical change in the battery and has conductivity, and for example, graphite; carbon-based materials such as carbon black, acetylene black, ketjen black, channel black, furnace black, lamp black, thermal black, and the like; conductive fibers such as carbon fiber, metal fiber, and the like; fluorocarbon; metal powders such as aluminum, and nickel powders and the like; conductive whiskers such as zinc oxide, potassium titanate, and the like; conductive metal oxides such as titanium oxide and the like; and conductive materials such as polyphenylene derivatives may be used

Typically, the conductive material may be included in an amount of 1 wt% to 20 wt%, preferably 1 wt% to 15 wt%, and more preferably 1 wt% to 10 wt% based on a total solid content excluding the solvent in the positive electrode slurry.

As the solvent, one or more of an aliphatic organic solvent such as heptane, decane, hexane, or cyclohexane; an aromatic organic solvent such as toluene, xylene, 1,2,4-trimethylbenzene, anisole, dimethoxybenzene, chlorobenzene, ethyl benzoate, or benzyl acetate; and an ester-based solvent such as isobutyl propionate, isoamyl propionate, isobutyl butyrate, or ethyl 2-methylbutyrate are used. Also, the solvent may be used in an amount that provides a desirable viscosity when the positive electrode active material and optionally a binder and a conductive material are included. For example, the solvent may be included so that the concentration of solids comprising the positive electrode active material and optionally a binder and a conductive material is 50 wt% to 95 wt%, preferably 70 wt% to 95 wt%, and more preferably 70 wt% to 90 wt%.

The negative electrode may be manufactured, for example, by applying a negative electrode slurry comprising a negative electrode active material, a binder, a conductive material, and a solvent onto a negative electrode current collector, or a graphite electrode made of carbon (C), an electrode comprising silver nanoparticles and carbon black, or lithium metal itself may be used as the negative electrode.

For example, when the negative electrode is manufactured by applying a negative electrode slurry onto a negative electrode current collector, the negative electrode current collector generally has a thickness of 3 to 500 µm. The negative electrode current collector is not particularly limited as long as it does not cause a chemical change in the battery and has high conductivity, and for example, copper, stainless steel, aluminum, nickel, titanium, calcined carbon, copper or stainless steel whose surface has been treated with carbon, nickel, titanium, silver, or the like, or aluminum-cadmium alloys may be used. Also, like the positive electrode current collector, the negative electrode current collector may have fine irregularities formed on its surface to strengthen the bonding strength of the negative electrode active material, and may be used in various forms such as films, sheets, foils, nets, porous materials, foams, non-woven materials, and the like.

As the negative electrode active material, one or more negative electrode active materials selected from the group consisting of silver nanoparticles, natural graphite, artificial graphite, carbonaceous materials, a lithium-containing titanium composite oxide (LTO), Si, SiOₓ, a metal (Me) such as Sn, Li, Zn, Mg, Cd, Ce, Ni, or Fe, an alloy of the metal (Me), an oxide (MeOₓ) of the metal (Me), and a composite of the metal (Me) and carbon may be used. As the negative electrode active material, specifically, a silicon-based negative electrode active material comprising silicon (Si), silicon oxide (SiOₓ), or a silicon alloy may be used. Preferably, as the negative electrode active material, a mixture comprising silver nanoparticles and carbon black may be used.

The negative electrode active material may be included in an amount of 60 wt% to 99 wt%, preferably 70 wt% to 99 wt%, and more preferably 80 wt% to 98 wt% based on a total solid content excluding the solvent in the negative electrode slurry.

The binder is a component that helps the binding of the conductive material, the active material, and the current collector. Examples of the binder comprise polyvinylidene fluoride, polyvinyl alcohol, carboxymethyl cellulose, starch, hydroxypropyl cellulose, regenerated cellulose, polyvinylpyrrolidone, tetrafluoroethylene, polyethylene, polypropylene, an EPDM, a sulfonated EPDM, styrene-butadiene rubber, a fluoroelastomer, and various copolymers thereof. Preferably, polyvinylidene fluoride is used.

Typically, the binder may be included in an amount of 1 wt% to 20 wt%, preferably 1 wt% to 15 wt%, and more preferably 1 wt% to 10 wt% based on a total solid content excluding the solvent in the negative electrode slurry.

The conductive material is a component for further improving the conductivity of the negative electrode active material. The conductive material is not particularly limited as long as it does not cause a chemical change in the battery and has conductivity, and for example, graphite such as natural graphite, artificial graphite, and the like; carbon black such as acetylene black, ketjen black, channel black, furnace black, lamp black, thermal black, and the like; conductive fibers such as carbon fiber and metal fiber; fluorocarbon; metal powders such as aluminum, and nickel powders and the like; conductive whiskers such as zinc oxide, potassium titanate, and the like; conductive metal oxides such as titanium oxide and the like; and conductive materials such as polyphenylene derivatives may be used.

The conductive material may be included in an amount of 1 wt% to 20 wt%, preferably 1 wt% to 15 wt%, and more preferably 1 wt% to 10 wt% based on a total solid content excluding the solvent in the negative electrode slurry.

The solvent may comprise an organic solvent such as N-methyl-2-pyrrolidone (NMP) and may be used in an amount that provides a desirable viscosity when the negative electrode active material and optionally a binder and a conductive material are included. For example, the solvent may be included so that the concentration of solids comprising the negative electrode active material and optionally a binder and a conductive material is 50 wt% to 95 wt%, and preferably, 70 wt% to 90 wt%.

As the negative electrode, a metal thin film itself may be used when a metal itself is used, or a metal physically bonded, roll-pressed, or deposited on the negative electrode current collector may be used. In the deposition, a metal may be subjected to electrodeposition or chemical vapor deposition.

For example, the metal thin film itself or the metal bonded/roll-pressed/deposited on the negative electrode current collector may comprise one metal or an alloy of two metals selected from the group consisting of lithium (Li), nickel (Ni), tin (Sn), copper (Cu), and indium (In).

The production of the all-solid-state battery having the above-described configuration is not particularly limited in the present invention, and known methods may be used.

In the manufacture of the all-solid-state battery of the present invention, electrodes comprising a positive electrode and a negative electrode are disposed and then shaped by applying pressure, thereby assembling a battery.

The assembled battery is installed inside an outer case and then sealed by heating and compression. As the outer case, a laminate pack made of aluminum or stainless steel, or a cylindrical or prismatic metal container is very suitable.

Since the all-solid-state battery according to the present invention stably exhibits excellent discharge capacity, excellent output characteristics, and an excellent capacity retention rate as described above, it is useful in the fields of portable devices such as mobile phones, laptop computers, digital cameras, and the like, and electric vehicles such as hybrid electric vehicles (HEVs) and the like.

### [Modes of the Invention]

Hereinafter, the present invention will be described in further detail with reference to examples. However, the present invention is not limited to these examples.

### <Examples and Comparative Examples>

### <Example 1>

As raw material powders, Li₂S, P₂S₅, LiCl, and LiBr were prepared in a molar ratio of 2.1:0.5:1:0.4, input into a ZrO₂ container together with 10 mm ZrO₂ balls (5 times the total precursor amount), and mixed 24 times using a planetary ball mill at 600 rpm for 20 minutes each, and the resulting mixture was obtained from the container and pulverized using an automatic grinder for 10 minutes.

Subsequently, the pulverized material was input into a furnace having an Ar atmosphere and thermally treated at 500 °C for 12 hours to obtain an argyrodite sulfide-based solid electrolyte.

### <Examples 2 to 5 and Comparative Examples 1 to 3>

Sulfide-based solid electrolytes were prepared in the same manner as in Example 1, except that a raw material powder content and a thermal treatment temperature were changed as shown in Table 1 below.

### <Comparative Example 4>

As raw material powders, Li₂S, P₂S₅, LiCl, and LiBr were prepared in a molar ratio of 2.1:0.5:1:0.4, input into a ZrO₂ container together with 3 mm ZrO₂ balls, and mixed 24 times using a planetary ball mill at 300 rpm for 20 minutes each, and the resulting mixture was obtained from the container and pulverized using an automatic grinder for 10 minutes.

Subsequently, the pulverized material was input into a furnace having an Ar atmosphere and thermally treated at 400 °C for 1 hour to obtain an argyrodite sulfide-based solid electrolyte.

**[Table 1]**

| Molar ratio | Chemical Formulas | Thermal treatment temperature (°C) | Li₂S | P₂S₅ | LiCl | LiBr | (d+e)/a | e/d |
|---|---|---|---|---|---|---|---|---|
| Example 1 | Li_{5.6}PS_{4.6}ClBr_{0.4} | 500 | 2.1 | 0.5 | 1.0 | 0.4 | 0.25 | 0.4 |
| Example 2 | Li_{5.5}PS_{4.5}ClBr_{0.5} | 500 | 2.0 | 0.5 | 1.0 | 0.5 | 0.273 | 0.5 |
| Example 3 | Li_{5.5}PS_{4.5}Cl_{0.8}Br_{0.7} | 500 | 2.0 | 0.5 | 0.8 | 0.7 | 0.273 | 0.875 |
| Example 4 | Li_{5.6}PS_{4.6}Cl_{0.8}Br_{0.6} | 500 | 2.1 | 0.5 | 0.8 | 0.6 | 0.25 | 0.75 |
| Example 5 | Li_{5.5}PS_{4.5}Cl_{1.2}Br_{0.3} | 500 | 2.0 | 0.5 | 1.2 | 0.3 | 0.273 | 0.25 |
| Comparative Example 1 | Li_{5.4}PS_{4.4}Cl_{0.8}Br_{0.8} | 500 | 2.1 | 0.5 | 0.8 | 0.8 | 0.296 | 1 |
| Comparative Example 2 | Li_{5.4}PS_{4.4}Cl_{1.0}Br_{0.6} | 520 | 2.1 | 0.5 | 1.0 | 0.6 | 0.296 | 0.6 |
| Comparative Example 3 | Li_{5.4}PS_{4.4}Cl_{0.6}Br_{1.0} | 520 | 2.1 | 0.5 | 0.6 | 1.0 | 0.296 | 1.667 |
| Comparative Example 4 | Li_{5.6}PS_{4.6}ClBr_{0.4} | 400 | 2.1 | 0.5 | 1 | 0.4 | 0.25 | 0.4 |

### <Experimental Example 1: Measurement of average crystal grain size>

X-ray diffraction pattern: The sulfide-based solid electrolyte was charged into a non-ambient sample holder for powder X-ray diffraction, and measurement was performed using the Bruker's D8 Endeavor XRD system by scanning at an applied voltage of 40 kV, an applied current of 40 mA, and a scan rate of 0.02°/3 secs according to Cu Kα radiation (X-ray wavelengths (λ)=1.5406 Å).

Average crystal grain size: determined by the Rietveld refinement calculation of an X-ray diffraction pattern. In the Rietveld refinement calculation, the Bruker's XRD analysis program, TOPAS, was used, and the following factors were reflected to consider instrumental peak broadening caused by a measuring instrument, Bruker's D8 Endeavor (Cu source).
1. X-ray beam divergence (0.5 degrees)
2. Detector type and size (1-D PSD, measurement area: 4.1 degrees)
3. Full axial method during axial convolution

### <Experimental Example 2: Analysis of X-ray diffraction pattern>

An X-ray diffraction pattern diagram was obtained in the same manner as in Experimental Example 1, the presence of peaks at specific 2θ values and the intensity thereof were observed, and values calculated by the following Mathematical Formulas 1 to 3 were obtained.

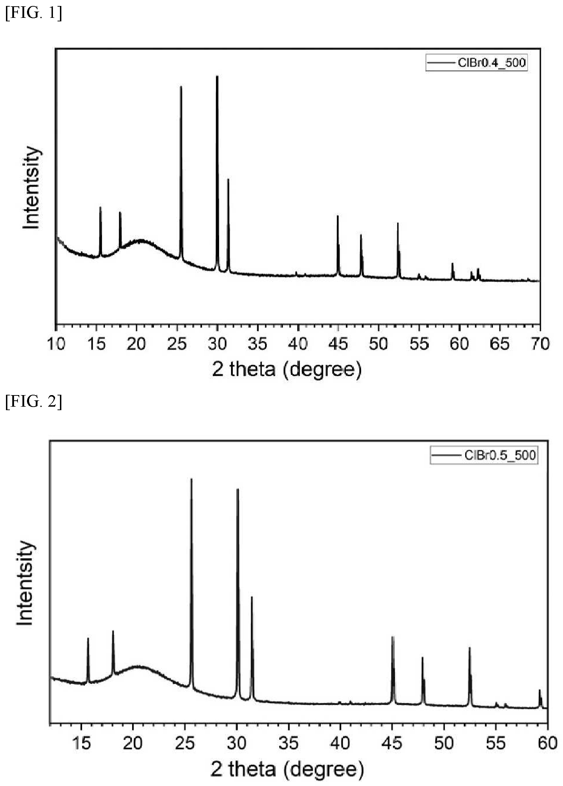

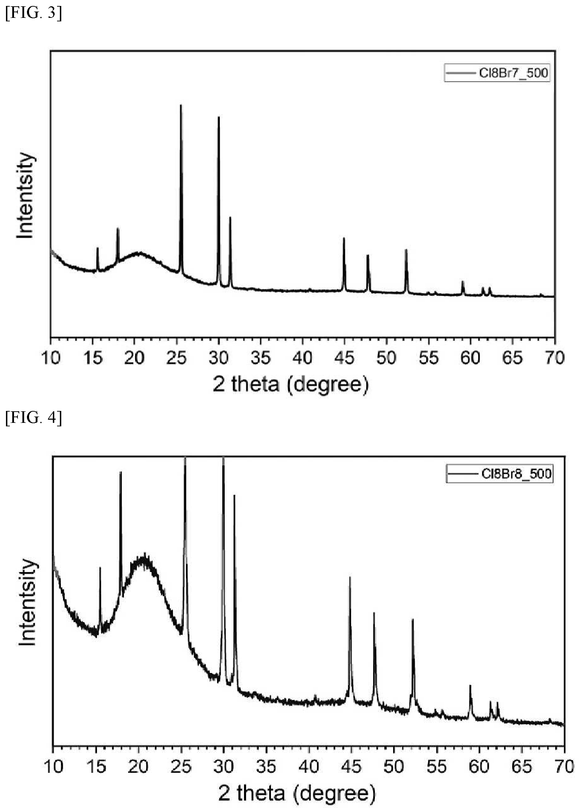

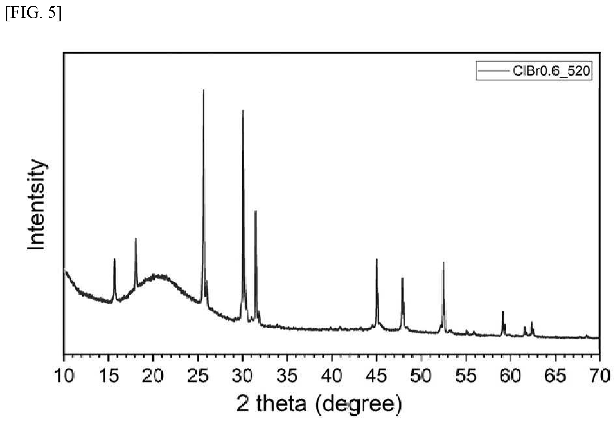

FIGS. 1 to 3 show the X-ray diffraction patterns of the sulfide-based solid electrolytes prepared in Examples 1 to 3, and FIGS. 4 and 5 show the X-ray diffraction patterns of the sulfide-based solid electrolytes prepared in Comparative Examples 1 and 2.

The solid electrolytes prepared in Examples 1 to 3 exhibited peaks at positions selected from diffraction angles (2θ) of 14° to 16°, 17° to 19°, 24° to 25.65°, 29.5° to 31°, 31° to 32°, and 44° to 46°, which are related to an argyrodite crystal structure.

The solid electrolytes prepared in Examples 1 to 3 did not exhibit peaks at diffraction angles (2θ) of 25.65° to 26.5° and 28.5° to 29.5°, which are related to an impurity phase, and peak splitting in peaks related to an argyrodite crystal structure.

On the other hand, the solid electrolytes prepared in Comparative Examples 1 and 2 exhibited an argyrodite crystal peak split into a doublet and triplet at 2θ = 24° to 25.65°, 29.5° to 31°, 31° to 32°, and 44° to 46°. In other words, it can be seen that the sulfide-based solid electrolytes of Comparative Examples 1 and 2 comprise an impurity phase. [Mathematical Formula 1] ${I}_{O} / \left({I}_{O}+{I}_{A}\right)$ [Mathematical Formula 2] ${I}_{O} / \left({I}_{O}+{I}_{B}\right)$ [Mathematical Formula 3] ${I}_{O} / \left({I}_{O}+{I}_{C}\right)$

In Mathematical Formulas 1 to 3,
I_{O} is the intensity of a peak at a diffraction angle (2θ) of 24° to 25.65° in X-ray diffraction pattern analysis,
I_{A} is the intensity of a peak at a diffraction angle (2θ) of 25.65° to 26.5°,
I_{B} is the intensity of a peak at a diffraction angle (2θ) of 28.5° to 29.5°, and
I_{C} is the intensity of a peak at a diffraction angle (2θ) of 33° to 35°.

### <Experimental Example 3: Measurement of ionic conductivity>

Ionic conductivity was derived from a resistance value of the Nyquist plot obtained by inputting 0.15 g of each sulfide-based solid electrolyte prepared in the examples and the comparative examples into a 13ϕ SUS mold, applying a pressure of 370 MPa to sufficiently densify the electrolyte structure, then slowly lowering the pressure, and measuring AC impedance in the measurement frequency range of 1 Hz to 7 MHz with an amplitude of 10 mV while maintaining a pressure of 100 MPa. All measurements were performed in a dry room at a temperature of 22 °C and a relative humidity of 0.7%. In this case, the ionic conductivity is the ionic conductivity after the thermally treated powder is ground using a mortar, and may refer to the ionic conductivity of the solid electrolyte before performing an ultrafine grinding process for particle size control.

**[Table 2]**

| Classification | Composition | Experimental Example 1 | Experimental Example 2 | | | Experimental Example 3 |
|---|---|---|---|---|---|---|
| Examples and comparative examples | Chemical Formulas | Units: nm | Mathematical Formula 1 | Mathematical Formula 2 | Mathematical Formula 3 | Units: mS/cm |
| Example 1 | Li_{5.6}PS_{4.6}ClBr_{0.4} | >300 nm | 1 | 1 | 1 | 8.5 |
| Example 2 | Li_{5.5}PS_{4.5}ClBr_{0.5} | >300 nm | 1 | 1 | 1 | 10.4 |
| Example 3 | Li_{5.5}PS_{4.5}Cl_{0.8}Br_{0.7} | 230 nm | 1 | 1 | 1 | 12.5 |
| Example 4 | Li_{5.6}PS_{4.6}Cl_{0.8}Br_{0.6} | >300 nm | not measured | not measured | not measured | 9.5 |
| Example 5 | Li_{5.5}PS_{4.5}Cl_{1.2}Br_{0.3} | >300 nm | not measured | not measured | not measured | 10.1 |
| Comparative Example 1 | Li_{5.4}PS_{4.4}Cl_{0.8}Br_{0.8} | 130 nm | 0.882 | 0.992 | 1 | 5.8 |
| Comparative Example 2 | Li_{5.4}PS_{4.4}Cl_{1.0}Br_{0.6} | 160 nm or less | 0.892 | 0.99 | 0.988 | 5.4 |
| Comparative Example 3 | Li_{5.4}PS_{4.4}Cl_{0.6}Br_{1.0} | 100 nm or less | not measured | not measured | not measured | 4.9 |
| Comparative Example 4 | Li_{5.6}PS_{4.6}ClBr_{0.4} | 180 nm or less | not measured | not measured | not measured | 6.9 |

In Table 2, ">" means exceeding the specified value. For example, >300 nm means exceeding 300 nm.

From the above results, it can be confirmed that the sulfide-based solid electrolytes of Examples 1 to 5 having an average crystal grain size of 200 nm or more exhibited excellent ionic conductivity, whereas the sulfide-based solid electrolytes of Comparative Examples 1 and 2 having an average crystal grain size of less than 200 nm exhibited low ionic conductivity.

Particularly, it can be confirmed that the sulfide-based solid electrolytes of Examples 1 to 3 did not comprise impurities, whereas the sulfide-based solid electrolytes of Comparative Examples 1 and 2 included impurities.

In addition, it can be confirmed that the sulfide-based solid electrolyte of Example 3 had the largest average crystal grain size, did not comprise impurities, and exhibited the best ionic conductivity.

### <Experimental Example 4: Experiment on change in average crystal grain size according to thermal treatment temperature>

The optimization of the process for producing a sulfide-based solid electrolyte is designed by changing various conditions. For example, an optimal thermal treatment temperature for high ionic conductivity is affected by the composition of a sulfide-based solid electrolyte. Also, the thermal treatment temperature changes a crystal grain size and is responsible for the formation of an impurity phase during the thermal treatment process. Accordingly, in Experimental Examples 4 to 6, the correlation between a thermal treatment temperature, ionic conductivity, a crystal grain size, and an impurity phase was investigated.

When the sulfide-based solid electrolytes of Examples 1 to 3 and Comparative Examples 1 to 3 were prepared, a thermal treatment temperature was changed at 20 °C intervals, the average crystal grain size of the prepared sulfide-based solid electrolytes was measured, and the results are shown in the following Table 3. For example, after the sulfide-based solid electrolyte according to Example 1 was prepared, the average crystal grain size thereof was measured, and the same process was repeatedly performed by changing only a thermal treatment temperature. Then, the results were recorded.

**[Table 3]**

| Classification | Example 1 | Example 2 | Example 3 | Comparative Example 1 | Comparative Example 2 | Comparative Example 3 |
|---|---|---|---|---|---|---|
| 360 °C | ~190 nm | ~250 nm | ~200 nm | ~180 nm | - | - |
| 380 °C | ~220 nm | ~270 nm | ~210 nm | ~250 nm | ~120 nm | ~100 nm |
| 400 °C | ~250 nm | ~300 nm | ~200 nm | >300 nm | ~300 nm | 250 nm |
| 420 °C | >300 nm | >300 nm | >300 nm | >300 nm | >300 nm | >300 nm |
| 440 °C | >300 nm | >300 nm | >300 nm | >300 nm | >300 nm | >300 nm |
| 460 °C | >300 nm | >300 nm | ~260 nm | >300 nm | >300 nm | >300 nm |
| 480 °C | >300 nm | >300 nm | >300 nm | ~120 nm | >300 nm | >300 nm |
| 500 °C | >300 nm | >300 nm | ~230 nm | ~130 nm | ~210 nm | ~190 nm |
| 520 °C | ~290 nm | ~280 nm | ~110 nm | ~80 nm | ~160 nm | ~100 nm |
| 540 °C | >300 nm | ~130 nm | - | - | ~190 nm | - |

As shown in Table 3, the average crystal grain size of the sulfide-based solid electrolyte tended to increase as a thermal treatment temperature increased, and rather decrease above a certain temperature.

The sulfide-based solid electrolytes of Examples 1 to 3 had an average crystal grain size of 200 nm or more, preferably, 300 nm or more in the range of 380 °C to 540 °C or 360 °C to 500 °C. On the other hand, the sulfide-based solid electrolytes of Comparative Examples 1 to 3 had an average crystal grain size of less than 300 nm or less than 200 nm at a thermal treatment temperature of 380 °C. The sulfide-based solid electrolytes of Comparative Examples 1 to 3 exhibited a tendency in which thermal treatment temperature increased as a thermal treatment temperature increased, but a rapid decrease in average crystal grain size around 500 °C was exhibited.

### <Experimental Example 5: Experiment on change in ionic conductivity according to thermal treatment temperature>

Ionic conductivity (units: mS/cm) was measured according to a thermal treatment temperature in the same manner as in Experimental Example 4, and the results were recorded in the following Table 4. Specifically, the temperature at which ionic conductivity was maintained at 6 mS/cm or more was measured, and a maximum thermal treatment temperature (T_{H}), a minimum thermal treatment temperature (T_{L}), and a difference between them (△T=T_{H}-T_{L}) were recorded.

**[Table 4]**

| Classification | Example 1 | Example 2 | Example 3 | Comparative Example 1 | Comparative Example 2 | Comparative Example 3 |
|---|---|---|---|---|---|---|
| 360 °C | 5.7 | 6.1 | 6.5 | 4.9 | - | - |
| 380 °C | 6.5 | 7.7 | 9.1 | 9.4 | 5.9 | 5.4 |
| 400 °C | 6.4 | 9.1 | 11.4 | 13.2 | 9.5 | 8.8 |
| 420 °C | 8.4 | 9.6 | 11.5 | 12.8 | 11.2 | 10.9 |
| 440 °C | 7.9 | 10.1 | 12.1 | 13.0 | 11.1 | 12 |
| 460 °C | 7.2 | 9.6 | 12.4 | 13.1 | 11.4 | 11.5 |
| 480 °C | 7.8 | 10.2 | 11.5 | 13.0 | 12.2 | 12.3 |
| 500 °C | 8.5 | 10.4 | 12.5 | 5.8 | 9.4 | 10 |
| 520 °C | 8.0 | 7.9 | 3.9 | 1.6 | 5.4 | 4.9 |
| 540 °C | 6.9 | 5.6 | - | - | 3.2 | - |
| T_{H} | 540 °C | 520 °C | 500 °C | 480 °C | 500 °C | 500 °C |
| T_{L} | 380 °C | 360 °C | 360 °C | 380 °C | 400 °C | 400 °C |
| ΔT | 160 °C | 160 °C | 140 °C | 100 °C | 100 °C | 100 °C |

Specifically, in the case of the sulfide-based solid electrolyte of Example 1, it can be confirmed that the maximum thermal treatment temperature (T_{H}) at which an ionic conductivity of 6 mS/cm or more was maintained was 540 °C, the minimum thermal treatment temperature (T_{L}) was 380 °C, and thus the difference between them was 160 °C.

On the other hand, in the case of the sulfide-based solid electrolyte of Comparative Example 1, it can be confirmed that the maximum thermal treatment temperature (T_{H}) at which an ionic conductivity of 6 mS/cm or more was maintained was 480 °C, the minimum thermal treatment temperature (T_{L}) was 380 °C, and thus the difference between them was 100 °C. For the sulfide-based solid electrolytes of the remaining examples and comparative examples, temperatures were measured by the same method as described above and then recorded.

From the above results, it can be confirmed that the sulfide-based solid electrolytes of the examples according to the present invention was capable of securing high ionic conductivity in a wide thermal treatment temperature range. Particularly, it can be confirmed that the thermal treatment temperature range exhibiting an ionic conductivity of 6 mS/cm or more was the same as the thermal treatment temperature range exhibiting an average crystal grain size of 200 nm or more in Experimental Example 4.

From the above results, it can be seen that since the sulfide-based solid electrolyte of the present invention has a wide thermal treatment temperature range capable of securing the average crystal grain size and ionic conductivity, a process window can be widened.

### <Experimental Example 6: Experiment on identification of impurity phase according to thermal treatment temperature >

Whether impurities were produced or not were confirmed according to a thermal treatment temperature in the same manner as in Experimental Example 4, and the results were recorded in Table 5 below. Specifically, the temperature at which impurities began to be produced was measured, the temperature immediately before that time point was recorded as a maximum thermal treatment temperature (T_{H}) and a minimum thermal treatment temperature (T_{L}), and a difference between them (△=T_{H}-T_{L}) was calculated and recorded.

An impurity phase was identified by an impurity peak. For the impurity peak, split peaks at diffraction angles (2θ) related to an argyrodite crystal structure and peaks at 25.65° to 26.5°, 26.5° to 27.5°, 28.5° to 29.5°, and 33° to 35° were confirmed. In this case, a case in which one or more of the peaks were detected was expressed as "detected," and a case in which the peak was not detected was expressed as "not detected."

**[Table 5]**

| Classification | Example 1 | Example 2 | Example 3 | Comparative Example 1 | Comparative Example 2 | Comparative Example 3 |
|---|---|---|---|---|---|---|
| 360 °C | detected | detected | detected | detected | - | - |
| 380 °C | detected | detected | detected | detected | detected | detected |
| 400 °C | detected | not detected | not detected | not detected | detected | detected |
| 420 °C | not detected | not detected | not detected | not detected | not detected | not detected |
| 440 °C | not detected | not detected | not detected | not detected | not detected | not detected |
| 460 °C | not detected | not detected | not detected | not detected | not detected | not detected |
| 480 °C | not detected | not detected | not detected | not detected | not detected | not detected |
| 500 °C | not detected | not detected | not detected | detected | not detected | not detected |
| 520 °C | not detected | detected | detected | detected | detected | detected |
| 540 °C | detected | detected | - | - | detected | - |

As shown in Table 5, all of the sulfide-based solid electrolytes of the examples and comparative examples exhibited a tendency in which an impurity phase was more easily formed when outside the predetermined thermal treatment temperature range.

Specifically, it can be confirmed that the sulfide-based solid electrolytes of Examples 1 to 3 did not comprise an impurity phase in a wider thermal treatment temperature range compared to the solid electrolytes of Comparative Examples 1 to 3. The results of Tables 3 to 5 were summarized, a maximum thermal treatment temperature (T_{H}), a minimum thermal treatment temperature (T_{L}), a difference between them (△=T_{H}-T_{L}) were calculated, and the results are shown in the following Table 6.

**[Table 6]**

| Classification | Ionic conductivity ≥ 6 mS/cm | Average crystal grain size ≥ 200 nm | No detection of impurity phase |
|---|---|---|---|
| Example 1 | 380 °C~540 °C (Δ160 °C) | 380 °C~540 °C (Δ160 °C) | 420 °C~520 °C (Δ100 °C) |
| Example 2 | 360 °C~520 °C (Δ160 °C) | 360 °C~520 °C (Δ160 °C) | 400 °C~500 °C (Δ100 °C) |
| Example 3 | 360 °C~500 °C (Δ140 °C) | 360 °C~500 °C (Δ140 °C) | 400 °C~500 °C (Δ100 °C) |
| Comparative Example 1 | 380 °C~480 °C (Δ100 °C) | 380 °C~460 °C (Δ80 °C) | 400 °C~180 °C (Δ80 °C) |
| Comparative Example 2 | 400 °C~500 °C (Δ100 °C) | 400 °C~500 °C (Δ100 °C) | 420 °C~500 °C (Δ80 °C) |
| Comparative Example 3 | 400 °C~500 °C (Δ100 °C) | 400 °C~180 °C (Δ80 °C) | 420 °C~500 °C (Δ80 °C) |

As shown in Table 6, it can be confirmed that the sulfide-based solid electrolytes of Examples 1 to 3 had a wider temperature range satisfying the physical properties compared to the sulfide-based solid electrolytes of Comparative Examples 1 to 3, and thus a process window was improved. Also, a process window capable of preparing a high-quality sulfide-based solid electrolyte not comprising an impurity phase was wider.

## Claims

1. A sulfide-based solid electrolyte having an average crystal grain size of 200 nm or more and represented by the following Chemical Formula 1:
[Chemical Formula 1] LiₐP_{1-b}M_{b}S_{c}Cl_{d}Brₑ
in Chemical Formula 1,
M is one or more selected from the group consisting of Sb, Si, Ge, Sn, Cu, Ag, Mg, Ca, Al, As, Na, K, and Ga, and
5≤a≤7.5, 0≤b≤0.3, 0.5≤a-c≤1.5, 0<d≤1.5, 0<e≤1.5.

2. The sulfide-based solid electrolyte of claim 1, wherein 0.23≤(d+e)/a≤0.29 is satisfied.

3. The sulfide-based solid electrolyte of claim 1, wherein 0.1≤e/d<0.99 is satisfied.

4. The sulfide-based solid electrolyte of claim 1, which has an argyrodite crystal structure.

5. The sulfide-based solid electrolyte of claim 1, which exhibits a first peak at one or more positions selected from the group consisting of diffraction angles (2θ) of 14° to 16°, 17° to 19°, 24° to 25.65°, 29.5° to 31°, 31° to 32°, and 44° to 46°, as determined by X-ray diffraction pattern analysis.

6. The sulfide-based solid electrolyte of claim 5, wherein the first peak is not split.

7. The sulfide-based solid electrolyte of claim 1, which does not comprise an impurity phase.

8. The sulfide-based solid electrolyte of claim 1, wherein a value calculated by the following Mathematical Formula 1 is 0.9 or more: [Mathematical Formula 1] ${I}_{O} / \left({I}_{O}+{I}_{A}\right)$ in Mathematical Formula 1,
I_{O} is the intensity of a peak at a diffraction angle (2θ) of 24° to 25.65° in X-ray diffraction pattern analysis, and
I_{A} is the intensity of a peak at a diffraction angle (2θ) of 25.65° to 26.5°.

9. The sulfide-based solid electrolyte of claim 1, wherein a value calculated by the following Mathematical Formula 2 is 0.994 or more: [Mathematical Formula 2] ${I}_{O} / \left({I}_{O}+{I}_{B}\right)$ in Mathematical Formula 2,
I_{O} is the intensity of a peak at a diffraction angle (2θ) of 24° to 25.65° in X-ray diffraction pattern analysis, and
I_{B} is the intensity of a peak at a diffraction angle (2θ) of 28.5° to 29.5°.

10. The sulfide-based solid electrolyte of claim 1, wherein a value calculated by the following Mathematical Formula 3 is 0.99 or more: [Mathematical Formula 3] ${I}_{O} / \left({I}_{O}+{I}_{C}\right)$ in Mathematical Formula 3,
I_{O} is the intensity of a peak at a diffraction angle (2θ) of 24° to 25.65° in X-ray diffraction pattern analysis, and
I_{C} is the intensity of a peak at a diffraction angle (2θ) of 33° to 35°.

11. The sulfide-based solid electrolyte of claim 1, wherein a process window parameter calculated by the following Mathematical Formula 4 is 100 °C or higher: [Mathematical Formula 4] $ΔT = {T}_{H} - {T}_{L}$ in Mathematical Formula 4,
T_{H} is a thermal treatment process temperature of the sulfide-based solid electrolyte, specifically, a maximum thermal treatment temperature satisfying one or more of first to third physical properties, and
T_{L} is a thermal treatment process temperature of the sulfide-based solid electrolyte, specifically, a minimum thermal treatment temperature satisfying one or more of first to third physical properties.
First physical property: An ionic conductivity at 22 °C is 6 mS/cm or more.
Second physical property: An average crystal grain size is 200 nm or more.
Third physical property: An impurity phase is not included.

12. The sulfide-based solid electrolyte of claim 1, which has an ionic conductivity of 6 mS/cm or more at 22 °C.

13. A method of preparing the sulfide-based solid electrolyte according to any one of claims 1 to 12, the method comprising steps of:
mixing a lithium-containing compound, a phosphorus-containing compound, a sulfur-containing compound, a chlorine-containing compound, and a bromine-containing compound to prepare a mixture; and
thermally treating the mixture.

14. An all-solid-state battery comprising:
a positive electrode;
a negative electrode; and
a solid electrolyte layer provided between the positive electrode and the negative electrode,
wherein the positive electrode or the solid electrolyte layer comprises the sulfide-based solid electrolyte according to any one of claims 1 to 12.
